**Europäisches Patentamt**

**European Patent Office**

**Office européen des brevets**

(11) Publication number : **0 522 760 A1**

## (12) EUROPEAN PATENT APPLICATION

(21) Application number : **92305967.9**

(22) Date of filing : **29.06.92**

(51) Int. Cl.⁵ : **C08J 5/18,** H02G 15/04, H02G 15/08, H01B 3/00, H01B 3/12, B29C 61/02, // B29K23:00

(30) Priority : **02.07.91 US 724736**

(43) Date of publication of application : **13.01.93 Bulletin 93/02**

(84) Designated Contracting States : **DE ES FR GB IT**

(71) Applicant : **MINNESOTA MINING AND MANUFACTURING COMPANY 3M Center, P.O. Box 33427 St. Paul, Minnesota 55133-3427 (US)**

(72) Inventor : **Yau, Steven Dongchen, c/o Minnesota Mining and Manufact. Co., 2501 Hudson Road, P.O. Box 33427 St. Paul, Minnesota 55133-3427 (US)**

(74) Representative : **Baillie, Iain Cameron et al c/o Ladas & Parry, Altheimer Eck 2 W-8000 München 2 (DE)**

(54) Heat recoverable tubular stress control element.

(57) A heat-recoverable polymeric article for stress-control in high voltage insulation comprising a heat-shrinkable polyolefin, from 10 to 25 volume percent carbon black, from 1 to 4 volume percent aluminum particles, and preferably from 1 to 11 volume percent ceramic fillers, said article having a dielectric constant of from 10 to 60.

EP 0 522 760 A1

## Background of the Invention

### Field of the Invention

The invention relates to heat-recoverable tubular members which are useful for controlling dielectric stress which occurs when the primary insulation of an electrical cable is cut back during electrical splice or termination operations.

The dielectric stress-controlling tubular members comprise polyolefin polymers having dispersed therein components selected from particulate materials such as carbon black, ceramic powders and conductive particles.

### Background to the Invention

It is necessary, during the installation and maintenance of high voltage electricity distribution systems, to terminate or splice together the current carrying cables. In accomplishing a splice or termination, it is necessary to remove the several layers of protective materials surrounding the metal core or conductor. When a cable is terminated or two sections of cable are spliced together a section of the conductor is left fully exposed and unprotected. Electrical fields associated with cables carrying high voltage currents tend to concentrate around the exposed insulation close to the cut back area. This concentration of electrical field causes a hot spot which can lead to premature cable failure. The problem of field concentration, also known as dielectric stress, may be prevented by placing a layer of high permittivity material in direct contact with the insulation. A material possessing high permittivity reduces the intensity of the electrical lines of force which surround the splice or termination.

Compositions possessing high permittivity have been achieved using a variety of materials. Typically the materials are used in the form of powders or platelets distributed in a suitable insulating medium. A material frequently used when high permittivity is needed is carbon black. See, for example, U.S. Patent Nos. 3,258,522 and 3,287,489 and British Patent 1,394,272.

The use of ceramic or other high permittivity inorganic fillers to achieve useful stress control compositions is disclosed in U.S. Patent Nos. 3,585,274; 3,673,305; 3,816,639; 3,823,334; 3,828,115 and 4,053,702.

It is possible to achieve further gains in electrical properties using a combination of different types of fillers. It is disclosed in U.S. Patent No. 3,349,164, that compositions containing combinations of carbon black and planarly oriented conductive platelets in organic polymer bases, in the form of thin films, provide high permittivity with high dielectric strength.

U.S. Patent No. 4,363,842 discloses the combination of ceramic or high permittivity inorganic fillers with carbon black and conductive platelets. This combination is disclosed to provide improved impulse strength as well control of dielectric stress of high voltage cable terminations or splices.

The stress control compositions are typically formed into tubular components and may be described as stress control tubes or sleeves. A variety of physical properties can be imparted to these tubular components by careful selection of the types of base polymer in which the fillers are dispersed. For instance, highly flexible components are obtained using elastomers including Fluorel™ brand elastomers, silicone, EPDM and EPM elastomers. These flexible components are supplied to enable the tube to slip over a splice or termination when sufficient force is applied. In another embodiment a flexible stress control sleeve is maintained in a stretched condition as a pre-stretched tube (PST). A core, which will collapse when required, holds the PST in its stretched condition before application.

U.S. Patent No. 4,383,131 discloses multilayer expanded tubes using a heat-shrink base polymer. After positioning over the splice or termination, they may be permanently applied using a suitable heat source. When heated, these tubes will soften and shrink to enclose the exposed electrical conductor. However, it is disclosed that, in order to eliminate the possibility of undesirable voids between the sleeve and the surface of the termination or joint, the inner layer of the tube may be coated with an appropriate void filler such as grease, mastic and the like.

U.S. Patent No. 4,431,861 discloses polymeric heat-shrinkable hollow articles which comprise a heat-shrinkable outer sleeve whose surface is anti-tracking at voltages of 2.5 kV, and at least part of whose inner surface has an electrical stress-grading composition coated thereon which is solid at room temperature. The use of mastics or other sealers between the splice and the sleeve is preferred.

The use of conventional heat-shrink stress control sleeves has some drawbacks. Conventional heat-shrink stress control sleeves require the application of multiple layers for effective protection, which raises the cost of the sleeve. Further, heat-shrink stress control tubes of the prior art do not always conform well to the contours of the splice or termination, and require coating the splice or termination with a conductive, stress-controlling viscous medium or grease before applying the heat-shrink stress control sleeve. Finally, prior art systems have required relatively lengthy sections of tube to effect stress control which is both costly and wasteful.

For heat-shrink components to be effective in dielectric stress control it is necessary to simplify the method of application, avoid the use of messy fluid components and reduce the number of layers, and length of tubing required.

Accordingly, the stress control sleeves of this invention afford easy application of a single, effective heat-shrinkable tube which, under the influence of sufficient heat, conforms well to the contours of the splice or termination. The use of high permittivity, high impulse strength components provides a device so effective in stress control that relatively short sections of tube provide the desired dampening of the electrical stresses (forces) around the splice.

Thus, via the present invention, it is possible to reduce the complexity and number of components needed where heat-shrink products are employed to effectively control dielectric stress which develops around an electrical splice or termination.

Summary of the Invention

The present invention provides a single heat-shrinkable , smooth walled, tubular member of uniform wall thickness for controlling electrical stress occurring in electrical splices or terminations.

Heat-shrink tubes of this invention comprise a base polymer having dispersed therein a multiplicity of particulate components which either impart conductivity or high permittivity to the structure. The addition of conductive materials, i.e., powdered carbon black and metal particles, represented by aluminum flake, are used to achieve the desired volume resistivity of from $10^{10}$ to $10^{13}$ ohm-cm. In controlling this, it is necessary to avoid adding excessive amounts of conductive materials as these may unfavorably affect the dielectric strength of the stress control compositions. The permittivity of the construction may be suitably increased or stabilized by the addition of materials of high dielectric constant such as alkaline earth metal titanates and/or titanium dioxide.

Specifically, preferred heat-recoverable articles of the invention comprise a single heat-shrinkable, smooth walled, tubular member having uniform wall thickness, and containing from 35 to 65 volume percent heat-shrinkable polyolefin-containing base polymer having dispersed therein a multiplicity of particulate components which either impart conductivity or high permittivity to the structure, including from 10 to 25 volume percent of carbon black, and from 1 to 4 volume percent of aluminum flake, based on total composition volume, said article having a dielectric constant of from 10 to 60.

The presence of conductive and high permittivity components results in most effective dielectric stress control and high impulse withstand for the tubular components of this invention. These benefits are achieved using a single heat-shrink structure without the need to augment the effective splice or termination protection using additional agents such as the stress control grease discussed in U.S. Patent No. 4,383,131. Furthermore, effective stress control by the present invention is accomplished using shorter lengths of protective stress control tubing than previously possible.

Detailed Description of the Invention

Materials suitable for stress control generally comprise a continuous phase of insulating polymeric compound in which a variety of fillers may be dispersed. These fillers increase the dielectric constant of the composition so that it exhibits high permittivity.

The positioning of these high permittivity compositions in contact with exposed conductors of high voltage cables may be accomplished using filled polymers of tubular configuration. Frequently the resulting stress control tubes have been flexible enough to be pushed into place around the exposed conductor. Alternatively the flexible tubes are provided in a pre-stretched condition wherein they are held in an expanded condition by use of a removable plastic holdout member or core. Further it is possible to provide a stress control tube in an expanded condition normally associated with heat-shrink components. In this case, the polymer composition possesses a more rigid structure typical of the base polymers which are used. The relative rigidity of heat-shrink polymers allows tubular sections to exist in an expanded condition prior to their application.

The use of heat-shrink tubes for controlling dielectric stress has been unsatisfactory because of complexities in the methods used to protect cables which have been subjected to splicing or terminating operations. Problems associated with earlier heat-shrink components have been overcome by the present invention. In this case, the stress control composition comprises filled polymers such as polyolefins, e.g., chlorinated polyethylene (CPE), polyethylene and polypropylene. A blend of polyolefins with other polymers such as copolymers of polyethylene with, e.g., polyvinyl acetate may also be used.

The fillers to be dispersed in these polymer blends include materials which increase the dielectric constant of the composition, i.e., carbon black and ceramic powders. Additionally planar conductive particles in the form of aluminum flake are added in carefully controlled concentrations to provide increased resistance to high voltage surges. Surges or impulses in high voltage cables are the result, for instance, of lightning strikes or unexpected voltage anomalies which adversely affect the electricity distributing system.

Thus the stress control tubes of this invention are effective in reducing intensity of the electric field associated with a bare splice or termination and also providing additional protection from high voltage surges. This functionality is translated into characteristics of high permittivity and high impulse withstand possessed by tubular components based on compositions of this invention. These compositions comprise from 35 to 65 percent by volume of base polymer. The base polymer comprises blends of polyolefin with copolymers of polyethylene and polyvinyl acetate.

The electrical properties of the base polymer are modified by the addition of carbon black. The carbon black is necessary to increase the dielectric constant of the base polymer. A higher dielectric constant helps relieve the electrical stress of the cutback point. The compositions of the invention contain from 10 to 25 volume percent of carbon black, preferably from 15 to 22 volume percent.

Ceramic powder fillers are also required in the present invention. The use of such materials provides superior permittivity and stability over a range of electrical stresses and assists in the generation of a lower electrical loss for a given permittivity level. In heat-shrinkable polymers, the ceramic fillers do not increase dielectric constant as effectively as carbon black, however, their inclusion results in a lower dissipation factor at a given dielectric constant. Also, the ceramic powders stabilize the dielectric constant over a wide range of electrical stress. This leads to an improvement in the AC breakdown strength. Useful fillers include Ticon™P, available from Tam Ceramics, Inc.

Ceramic fillers are present in total amounts of from 1 to 11 volume percent of ceramic powders. In a preferred embodiment, combinations of barium titanate and titanium dioxide are used. Such compositions preferably contain from 1.5 to 7.0 volume percent barium titanate and from 1.0 to 3.5 volume percent titanium dioxide.

Aluminum particles are critical to the high impulse strength of the compositions of the invention. The addition of aluminum flake also accommodates unexpected high voltage surges which may occur in electrical cables. The effectiveness of aluminum particles on the high impulse strength of the elastomeric composition occurs only when specific amounts are used. Most importantly, the loading must exceed a threshold value in order for the final composition to exhibit significant improvement in the high impulse strength. An effective concentration of aluminum requires addition of the flake material in excess of 1.0 volume percent, and may vary somewhat with the polymeric system. Usually one volume percent of aluminum flake of the total composition is the minimum amount to provide Maximum Impulse Withstand values of 110 KV (positive and negative) for 15 KC rated class 3 terminations. Therefore, the preferred concentration of aluminum flake is that which just exceeds the threshold amount required to produce a noticeable sharp increase in Basic Impulse Insulation Level (BIL).

Additional amounts of aluminum do not improve the impulse strength significantly. Further, use of surplus aluminum causes the polymer to become conductive, whereupon it has lower dielectric strength and decreasing AC Step strength. Excessive aluminum also impairs the physical strength of the polymer and mars the surface aesthetics.

For desirable values of impulse withstand (IEEE Standard 48-1990) in the preferred embodiment comprising a polymeric blend of chlorinated polyethylene and polyvinyl acetate, at least 1.0 volume percent of aluminum is required, and not more than 4 volume percent, preferably from 1.0 to 2.5 volume percent.

Preferably, the heat-shrinkable articles of the present invention are crosslinked. A variety of conventional crosslinking methods are useful, including but not limited to electron beam irradiation, and chemical crosslinking agents such as multiacrylates, and peroxides, e.g., Vulcup™ 40KE and Dicup™ 40KE, both available from Hercules Corp. When used, peroxides are effective in amounts of from 0.5 to 3.0 volume percent.

Preferred heat-shrinkable articles of the invention have an original inner diameter of 1.9 centimeters and a wall thickness of from 25 to 30 millimeters. The tubing is extruded and crosslinked in a continuous process.

Further details of the stress controlling, high impulse strength, heat-shrink tubes is given in the following non-limiting examples.

In view of the foregoing description, it will be apparent that the invention is not limited to the specific details set forth herein and various other modifications are equivalent for the stated and illustrated functions without departing from the spirit of the invention and the scope thereof as defined in the appended claims.

<u>Test Methods</u>

<u>Sample Preparation</u>

The electrical test results for the following examples were obtained using a 15 KV tubular heat-shrinkable termination design with 9-inch semiconductor cutback, i.e., the distance from the exposed conductor to the cable shield or ground potential. The stress control tubing which was 7.5 inches long, was shrunk over the conductor without the need for high permittivity sealants. A layer of adhesive was then applied to both ends of the cable cutback after which a section of anti-tracking tube was shrunk in place so as to enclose the entire cutback area. The AC Step Test was performed starting from 40 KV and increased by 5 KV per 5 minutes for each step.

## Examples

### Comparative Example 1

| CHEMICAL | PARTS BY WEIGHT | REMARKS |
|---|---|---|
| Tyrin™ CPE 566 (available from Dow Chemical) | 100.0 | Chlorinated Polyethylene |
| Elvax 470™ (available from DuPont) | 32.5 | Ethylene Vinyl Acetate Copolymer |
| Zinc Stearate | 3.0 | |
| "SR-350" (available from Sartomer Co.) | 1.5 | Trimethylol Propane Trimethacrylate |
| Flectol H™ (available from Harwick) | 2.0 | Polymerized 1,2-dihydro-2,2,4-trimethylquinoline |
| Dythal™ (available from Synthetic Products) | 7.5 | Lead Stabilizer |
| Ticon™ P (available from Tam Ceramic Co.) | 75.0 | Barium Titanate |
| Vulcan™ XC-72 (available from Cabot Co.) | 18.0 | Carbon Black |

| | % by Weight | % by Volume |
|---|---|---|
| Carbon Black | 7.5 | 6.26 |
| Barium Titanate | 31.32 | 8.10 |

Electrical Properties:

| | |
|---|---|
| K @ 23 C 160 Volt | 23.7 |
| tan D @ 23 C 160 V | 0.047 |
| Volume Resistivity, Ohm-cm | $5.36 \times 10^{12}$ |
| Dielectric Strength, V/mil | 313 |

High Voltage Performance

| | Pos. | Neg. |
|---|---|---|
| Maximum Impulse Withstand | +105 KV (fail) | -137 KV (fail) |
| AC Breakdown Strength | 55 KV | |

The above composition, although containing carbon black and barium titanate and having a dielectric constant of 23.7, does not exhibit either adequate impulse performance or adequate AC breakdown strength. It shows that a compound with a high dielectric constant is not necessarily satisfactory for stress control.

Comparative Example 2

| CHEMICAL | PARTS BY WEIGHT | REMARKS |
|---|---|---|
| Tyrin™ CPE 566 | 80 | Chlorinated Polyethylene |
| Elvax™ 260 (available from DuPont) | 20 | Ethylene Vinyl Acetate Copolymer |
| Zinc Stearate | 2.5 | |
| "SR-350" | 2.5 | Trimethylol Propane Trimethacrylate |
| Agerite MA™ (available from R.T. Vanderbilt) | 2 | Polymerized 1,2-dihydro-2,2,4-trimethylolquinoline |
| Dythal™ | 6 | Lead Stabilizer |
| Ticon™ P | 25 | Barium Titanate |
| Titanium Dioxide | 10 | |
| Furnex™ N754" (available from Columbian Chemical) | 48 | Carbon Black |
| Chlorowax™ | 8 | Chlorinated Paraffin |
| Total | 204 | |

| | % by Weight | % by Volume |
|---|---|---|
| Carbon Black | 23.53 | 18.33 |
| Barium Titanate | 12.25 | 2.96 |
| Titanium Dioxide | 4.90 | 1.70 |

Electrical Properties:
| | |
|---|---|
| K @ 23 C 160 Volt | 17.9 |
| tan D @ 23 C 160 V | 0.056 |
| Volume Resistivity, Ohm-cm | $2.34 \times 10^{12}$ |
| Dielectric Strength, V/mil | 199 |

High Voltage Performance

| | Pos. | Neg. |
|---|---|---|
| Maximum Impulse Withstand | +100 KV (fail) | -110 KV (fail) |
| AC Breakdown Strength | | 100 KV |

The above composition uses a combination of barium titanate and titanium dioxide and shows improved AC breakdown strength, but still fails to meet the impulse requirement.

<u>Comparative Example 3</u>

| CHEMICAL | PARTS BY WEIGHT | REMARKS |
|---|---|---|
| Tyrin™ CPE 566 | 70 | Chlorinated Polyethylene |
| Elvax™ 470 | 30 | Ethylene Vinyl Acetate Copolymer |
| Calcium Stearate | 2.5 | |
| Drimix™ SR-350-75E (available from Kenrich) | 2.5 | Dispersion of "SR-350" |
| Agerite MA™ | 2 | Polymerized 1,2-dihydro-2,2,4-trimethylolquinoline |
| Dythal™ | 6 | Lead Stabilizer |
| Ticon™ P | 45 | Barium Titanate |
| Titanium Dioxide | 15 | |
| Furnex™ N754 | 55 | Carbon Black |
| Chlorowax™ 70 (available from Oxychem) | 8 | Chlorinated Paraffin |
| Alcoa™ 1651 (available from Alcoa) | 4 | Aluminum Flakes |
| Vulcup™ 40 KE (available from Hercules) | 4 | α,α'bis(t-butylperoxy) diisopropyl benzene on 60% Burgess KE |

| | <u>% by Weight</u> | <u>% by Volume</u> |
|---|---|---|
| Carbon Black | 22.54 | 19.07 |
| Barium Titanate | 18.44 | 4.84 |
| Titanium Dioxide | 6.15 | 2.32 |
| Aluminum Flakes | 1.64 | 0.99 |

<u>Electrical Properties:</u>

| | |
|---|---|
| K @ 23 C 160 Volt | 23.0 |
| tan D @ 23 C 160 V | 0.060 |
| Volume Resistivity, Ohm-cm | $3.47 \times 10^{13}$ |
| Dielectric Strength, V/mil | 214 |

<u>High Voltage Performance</u>

| | <u>Pos.</u> | <u>Neg.</u> |
|---|---|---|
| Maximum Impulse Withstand | +105 KV (fail) | -154 KV (fail) |
| AC Breakdown Strength | | 70 KV |

The above composition contains all three key ingredients required for stress control performance: carbon black, barium titanate and aluminum flakes. However, the composition does not exhibit adequate High Impulse strength to meet the requirements because an insufficient amount of aluminum flakes, (less than 1.0 volume percent) is present.

## Example 4

| CHEMICAL | PARTS BY WEIGHT | REMARKS |
| --- | --- | --- |
| Tyrin™ CPE 566 | 70 | Chlorinated Polyethylene |
| Elvax™ 470 | 30 | Ethylene Vinyl Acetate Copolymer |
| Calcium Stearate | 2.5 | |
| Drimix™ SR-350-75E | 2.5 | Dispersion of "SR-350" |
| Agerite MA™ | 2 | Polymerized 1,2-dihydro-2,2,4-trimethylolquinoline |
| Dythal™ | 6 | Lead Stabilizer |
| Furnex™ N754 | 50 | Carbon Black |
| Chlorowax™ 70 | 8 | Chlorinated Paraffin |
| Alcoa™ 1651 | 4 | Aluminum Flakes |
| Vulcup™ 40 KE | 4 | $\alpha,\alpha'$bis(t-butylperoxy) diisopropyl benzene on 60% Burgess KE |

| | % by Weight | % by Volume |
| --- | --- | --- |
| Carbon Black | 27.93 | 19.03 |
| Barium Titanate | 0 | 0 |
| Titanium Dioxide | 0 | 0 |
| Aluminum Flakes | 2.23 | 1.08 |

### Electrical Properties:

| | |
| --- | --- |
| K @ 23 C 160 Volt | 21.1 |
| tan D @ 23 C 160 V | 0.068 |
| Volume Resistivity, Ohm-cm | $6.30 \times 10^{13}$ |
| Dielectric Strength, V/mil | 164 |

### High Voltage Performance:

| | Pos. | Neg. |
| --- | --- | --- |
| Maximum Impulse Withstand | +185 KV (pass) | -182 KV (pass) |
| AC Breakdown Strength | 60 KV | |

The above composition contains carbon black and aluminum flakes but not barium titanate or titanium oxide. It exhibits very strong impulse performance but the AC strength is lower.

Example 5

| CHEMICAL | PARTS BY WEIGHT | REMARKS |
|---|---|---|
| Tyrin™ CPE 566 | 70 | Chlorinated Polyethylene |
| Elvax™ 470 | 30 | Ethylene Vinyl Acetate Copolymer |
| Calcium Stearate | 2.5 | |
| Drimix™ SR-350-75E | 2.5 | Dispersion of "SR-350" |
| Agerite MA™ | 2 | Polymerized 1,2-dihydro-2,2,4-trimethylolquinoline |
| Dythal™ | 6 | Lead Stabilizer |
| Ticon™ P | 20 | Barium Titanate |
| Titanium Dioxide | 10 | |
| Furnex™ N754 | 50 | Carbon Black |
| Chlorowax™ 70 | 8 | Chlorinated Paraffin |
| Alcoa™ 1651 | 4 | Aluminum Flakes |
| Vulcup™ 40 KE | 4 | $\alpha,\alpha'$bis(t-butylperoxy) diisopropyl benzene on 60% Burgess KE |

| | % by Weight | % by Volume |
|---|---|---|
| Carbon Black | 23.92 | 18.29 |
| Barium Titanate | 9.57 | 2.27 |
| Titanium Dioxide | 4.78 | 1.63 |
| Aluminum Flakes | 1.91 | 1.04 |

Electrical Properties:

| | |
|---|---|
| K @ 23 C 160 Volt | 22.2 |
| tan D @ 23 C 160 V | 0.054 |
| Volume Resistivity, Ohm-cm | $2.77 \times 10^{13}$ |
| Dielectric Strength, V/mil | 186 |

High Voltage Performance

| | Pos. | Neg. |
|---|---|---|
| Maximum Impulse Withstand | +177 KV (pass) | -173 KV (pass) |
| AC Breakdown Strength | | 70 KV |

The above composition is identical to that of Example 4 except for the addition of barium titanate and titanium dioxide. The AC breakdown strength is improved. This formulation meets the requirements of the maximum withstand and AC Step tests.

<u>Example 6</u>

| CHEMICAL | PARTS BY WEIGHT | REMARKS |
|---|---|---|
| Tyrin™ CPE 566 | 70 | Chlorinated Polyethylene |
| Elvax 470™ | 30 | Ethylene Vinyl Acetate Copolymer |
| Calcium Stearate | 2.5 | |
| Drimix™ SR-350-75E | 2.5 | Dispersion of "SR-350" |
| Agerite MA™ | 2 | Polymerized 1,2-dihydro 2,2,4-trimethylolquinoline |
| Dythal™ | 6 | Lead Stabilizer |
| Ticon™ P | 45 | Barium Titanate |
| Titanium Dioxide | 15 | |
| Furnex™ N754 | 55 | Carbon Black |
| Chlorowax™ 70 | 8 | Chlorinated Paraffin |
| Alcoa™ 1651 | 5 | Aluminum Flakes |
| Vulcup™ 40 KE | 4 | $\alpha,\alpha'$bis(t-butylperoxy) diisopropyl benzene on 60% Burgess KE |
| Total | 245 | |

| | % by Weight | % by Volume |
|---|---|---|
| Carbon Black | 22.45 | 19.03 |
| Barium Titanate | 18.37 | 4.83 |
| Titanium Dioxide | 6.12 | 2.31 |
| Aluminum Flakes | 2.04 | 1.23 |

<u>Electrical Properties:</u>

| | |
|---|---|
| K @ 23 C 160 Volt | 32.9 |
| tan D @ 23 C 160 V | 0.121 |
| Volume Resistivity, Ohm-cm | $2.80 \times 10^{13}$ |
| Dielectric Strength, V/mil | 159 |

<u>High Voltage Performance</u>

| | Pos. | Neg. |
|---|---|---|
| Maximum Impulse Withstand | +171 KV (pass) | -168 KV (pass) |
| AC Breakdown Strength | | 85 KV |

The above composition exhibits excellent AC step and impulse strength properties. It should be noted that it contains more than the critical amount of the flaked aluminum, e.g., more than 1.0 volume percent as opposed to Example 3, which contains slightly less than the critical amount, and does not meet the requirement. Therefore, it is clear that with balancing the three key ingredients, a compound can be formulated to meet the requirements of high voltage performance.

## Claims

1. A heat-recoverable article for controlling electrical stress occurring in electrical splices or terminations comprising a single heat-shrinkable, smooth walled, tubular member having uniform wall thickness; said member comprising from 35 to 65 volume percent heat-shrinkable polyolefin-containing base polymer having dispersed therein a multiplicity of particulate components which either impart conductivity or high permittivity to the structure, said particulate components including from 10 to 25 volume percent of carbon black, and from 1 to 4 volume percent of aluminum flake, based on total composition volume, said article having a dielectric constant of from 10 to 60.

2. A heat-recoverable article according to claim 1 containing from 1 to 2.5 volume percent aluminum flake.

3. A heat-recoverable article according to claim 1 further comprising from to 1 to 11 volume percent of ceramic filler.

4. A heat-recoverable article according to claim 3 wherein said ceramic fillers are selected from the group consisting of titanium dioxide, barium titanate and mixtures thereof.

5. A heat-recoverable article according to claim 4 comprising from 1 to 3.5 volume percent titanium dioxide, and from 1.5 to 7 volume percent barium titanate.

6. A heat-recoverable article according to claim 1 wherein the base polymer comprises a polyolefin selected from the group consisting of chlorinated polyethylene (CPE), polyethylene and polypropylene.

7. A heat-recoverable article according to claim 6 further comprising a vinyl acetate based polymer, and from 10 to 25% by volume aluminum.

8. A heat-recoverable article according to claim 1 said base polymer having been crosslinked by a means selected from addition of a chemical crosslinking agent and irradiation by electron beam.

European Patent Office

# EUROPEAN SEARCH REPORT

Application Number

## DOCUMENTS CONSIDERED TO BE RELEVANT

EP 92305967.9

| Category | Citation of document with indication, where appropriate, of relevant passages | Relevant to claim | CLASSIFICATION OF THE APPLICATION (Int. Cl.5) |
|---|---|---|---|
| X | DATABASE WPIL, no. 85-033 459 DERWENT PUBLICATIONS LTD., London, GB <br> * Abstract * <br> & JP-A-59-225 927 (UNITIKA K.K.) 19-12-84 <br> -- | 1,2,6, 7 | C 08 J 5/18 <br> H 02 G 15/04 <br> H 02 G 15/08 <br> H 01 B 3/00 <br> H 01 B 3/12 <br> B 29 C 61/02// <br> B 29 K 23:00 |
| D,Y | US - A - 4 363 842 (NELSON) <br> * Claims; column 3, lines 35-45 * <br> -- | 1-6 | |
| Y | EP - A - 0 292 676 (KABELMETAL ELECTRO GMBH) <br> * Claims; column 5, line 29 * <br> -- | 1,6-8 | |
| A | EP - A - 0 073 613 (SUMITOMO ELECTRIC INDUSTRIES LIMITED) <br> * Claims * <br> ---- | 1,6-8 | |
| | | | TECHNICAL FIELDS SEARCHED (Int. Cl.5) <br><br> C 08 J <br> H 02 G <br> H 01 B <br> B 29 C |

The present search report has been drawn up for all claims

| Place of search | Date of completion of the search | Examiner |
|---|---|---|
| VIENNA | 29-09-1992 | WEIGERSTORFER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)